# EUROPEAN PATENT APPLICATION

(11) **EP 4 831 317 A1**
(43) Date of publication of application: **28.10.2026**
(21) Application number: 24907999.7
(22) Date of filing: 17.12.2024
(51) Int. Cl.: C22B 26/12, C22B 3/12, C22B 3/22

(54) **RECOVERING METHOD OF LITHIUM**

(30) Priority: 18.12.2023 KR 20230184211
(71) Applicant: POSCO Holdings Inc., Pohang-si, Gyeongsangbuk-do 37859 (KR)
(72) Inventor: YANG, Heok, Pohang-si, Gyeongsangbuk-do 37859 (KR); PARK, Jaesin, Pohang-si, Gyeongsangbuk-do 37859 (KR); PARK, Woonkyoung, Pohang-si, Gyeongsangbuk-do 37859 (KR); KUK, Seung Taek, Pohang-si, Gyeongsangbuk-do 37859 (KR); JUNG, Myungwon, Pohang-si, Gyeongsangbuk-do 37859 (KR); KIM, Ju Young, Pohang-si, Gyeongsangbuk-do 37859 (KR)
(74) Representative: Pfenning, Meinig & Partner mbB
(86) International application number: PCT/KR2024/020458
(87) International publication number: WO 2025/135716

(57) **Abstract**

The method for recovering lithium according to the present invention includes: preparing a solution containing lithium; adding a calcium remover to the solution containing lithium to precipitate a precipitate containing calcium; and separating the precipitated precipitate to obtain a solution containing lithium from which calcium has been removed, wherein a recovery rate of lithium satisfies Equation 1.

## Description

### [TECHNICAL FIELD]

The present invention relates to a method for recovering lithium.

### [BACKGROUND ART]

Lithium compounds are used for various purposes across various industries, such as secondary batteries, ceramics, glass, alloys, pharmaceuticals, and the like, and with the recent commercialization of electric vehicles and an increase in the need for electric power storage, demand for lithium materials is also expected to grow significantly in the future.

Raw materials for manufacturing lithium materials include mineral, brine, sea water, and the like. Among these, minerals include spodumene, petalite, lepidolite, and the like, and contain a relatively large amount of lithium of about 1% to 1.5%. However, in order to extract lithium from minerals, a very large number of processes, such as flotation, high-temperature calcination, pulverization, acid mixing, extraction, purification, concentration, precipitation, and the like, must be performed. Accordingly, a recovery procedure is complicated, costs are high due to high energy consumption, and there is a problem of severe environmental pollution due to use of acid in the process of extracting lithium.

In addition, it is known that a total of 2.5×10¹¹ tons of lithium is dissolved in seawater, and technologies mainly involve introducing a recovery apparatus including an adsorbent into seawater to selectively adsorb lithium and then extracting lithium by acid treatment. However, since the concentration of lithium contained in seawater is only 0.1 ppm to 0.2 ppm, extracting lithium from seawater is very inefficient and has a problem of poor economic feasibility.

Due to these problems, lithium is currently mainly extracted from brine. Brine is produced from natural salt lakes, and more than 70% of the world's reserves are distributed in South American regions such as Argentina, Chile, and Bolivia.

Lithium contained in brine is mainly extracted in the form of lithium carbonate. In a commercialized process, in order to extract lithium from lithium-containing brine in the form of lithium carbonate, a well is drilled in a natural salt lake located at an altitude of 3,000 m or higher, brine is pumped and confined in evaporation ponds, and then naturally evaporated over a long period of several months to about one year to concentrate lithium several to several tens of times. Thereafter, impurities such as Mg, Ca, and B are precipitated and removed, and lithium is recovered by causing an amount exceeding the solubility of lithium carbonate to precipitate.

In such brine, divalent cation impurities are present in an amount greater than lithium. When lithium is obtained as a solid, the impurities are precipitated together, and thus a purification process for removing the impurities is performed before lithium extraction. However, in such a purification process, lithium is precipitated in the form of a salt together with other impurities, thereby somewhat causing a problem of lithium loss.

Accordingly, there is a need to develop a method for recovering lithium, by which precipitation of lithium can be minimized in a purification process and impurities can be easily removed.

### [DETAILED DESCRIPTION OF THE INVENTION]

### [Technical Problem]

The present invention is intended to provide a method for recovering lithium, by which lithium loss can be minimized and calcium can be easily removed, by quantifying process technology for efficiency according to calcium concentration.

### [Technical Solution]

The present invention provides a method for recovering lithium, the method including: preparing a solution containing lithium; adding a calcium remover to the solution containing lithium to precipitate a precipitate containing calcium; and separating the precipitated precipitate to obtain a solution containing lithium from which calcium has been removed, wherein a recovery rate of lithium satisfies the following Equation 1. [Equation 1] 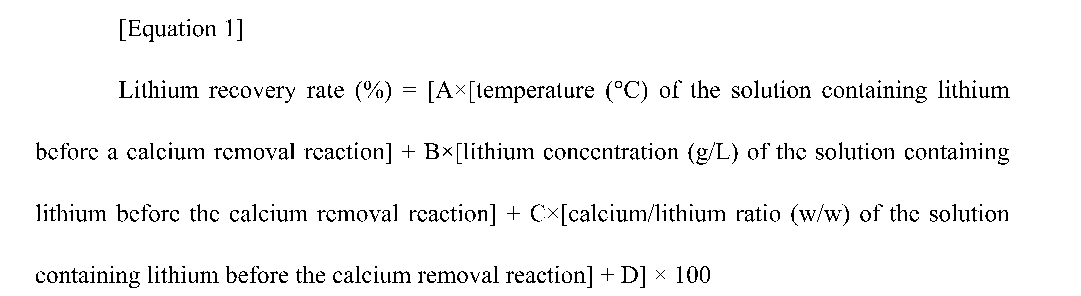 Lithium recovery rate (%) = [A×[temperature (°C) of the solution containing lithium before a calcium removal reaction] + B×[lithium concentration (g/L) of the solution containing lithium before the calcium removal reaction] + C×[calcium/lithium ratio (w/w) of the solution containing lithium before the calcium removal reaction] + D] × 100

In Equation 1,
A is a rational number from -0.0008 to -0.0012,
B is a rational number from -0.008 to -0.012,
C is a rational number from -0.1 to -0.15, and
D is a rational number from 1.05 to 1.20.

### [Advantageous Effects]

The method for recovering lithium according to the present invention has an advantage in that a lithium recovery rate can be easily predicted by quantifying process technology according to concentrations of lithium and calcium and a reaction temperature.

In addition, the method for recovering lithium according to the present invention has an advantage in that calcium can be easily removed while minimizing lithium loss.

### [BRIEF DESCRIPTION OF THE DRAWINGS]

FIG. 1 is a diagram showing solubility of Li₂CO₃ according to temperature.
FIG. 2 is a graph showing a decrease amount of lithium concentration according to calcium content/lithium content.
FIG. 3 is a graph showing a lithium recovery rate according to lithium concentration of a lithium-containing solution.
FIG. 4 is a graph showing lithium recovery rates according to Preparation Examples and predicted values calculated through Equation 1.

### [MODE FOR CARRYING OUT THE INVENTION]

Hereinafter, embodiments of the present invention will be described in detail. However, these are provided as examples, and the present invention is not limited thereto, and the present invention is only defined by the scope of the claims to be described below.

In the present invention, when a member is described as being positioned "on" another member, this includes not only a case in which the member is in direct contact with the other member, but also a case in which still another member is interposed between the two members.

In the present invention, when a part is described as "including" a certain component, this means that other components may be further included, rather than excluding other components, unless specifically stated to the contrary.

One aspect of the present invention relates to a method for recovering lithium, the method including: preparing a solution containing lithium; adding a calcium remover to the solution containing lithium to precipitate a precipitate containing calcium; and separating the precipitated precipitate to obtain a solution containing lithium from which calcium has been removed, wherein a recovery rate of lithium satisfies the following Equation 1. [Equation 1] 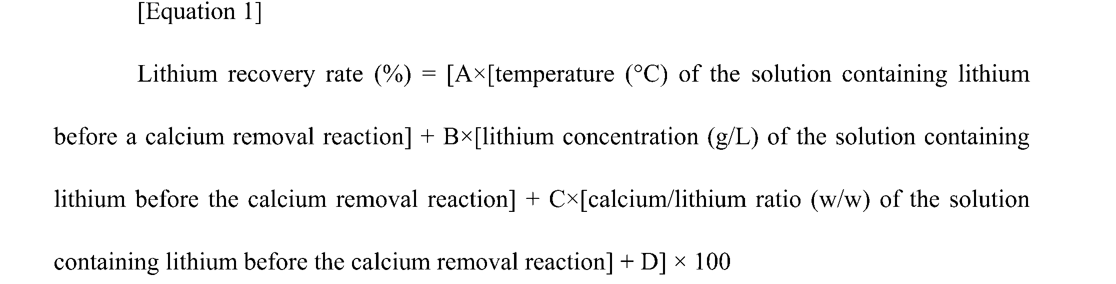 Lithium recovery rate (%) = [A×[temperature (°C) of the solution containing lithium before a calcium removal reaction] + B×[lithium concentration (g/L) of the solution containing lithium before the calcium removal reaction] + C×[calcium/lithium ratio (w/w) of the solution containing lithium before the calcium removal reaction] + D] × 100

In Equation 1,
A is a rational number from -0.0008 to -0.0012,
B is a rational number from -0.008 to -0.012,
C is a rational number from -0.1 to -0.15, and
D is a rational number from 1.05 to 1.20.

The method for recovering lithium according to the present invention has an advantage in that, in the step of precipitating the precipitate containing calcium, that is, in removing the calcium from the solution containing lithium, by controlling the temperature of the solution containing lithium, the concentration of lithium, and the content ratio of calcium/lithium, the recovery rate of lithium can be predicted, and lithium can be recovered more effectively and efficiently.

In the present invention, the "solution containing lithium before a calcium removal reaction" refers to a solution in a state immediately after the "solution containing lithium" and the "calcium remover in the form of powder or solution" are mixed, before the calcium removal reaction starts.

The method for recovering lithium according to the present invention includes a step of preparing a solution containing lithium.

In the present invention, the solution containing lithium may be seawater, salt lake water, and/or brine containing lithium.

Specifically, the solution containing lithium may be brine. More specifically, the solution containing lithium may be concentrated brine.

The concentrated brine contains lithium and may have a pH in a range of 5.0 to 7.0, but is not limited thereto.

The method of obtaining the concentrated brine is not limited in the present invention.

A concentration of a lithium component in the solution containing lithium, specifically the concentrated brine, may be 0.5 g/L to 20 g/L, preferably 3 g/L to 15 g/L, and more preferably 4 g/L to 12 g/L, but is not limited thereto.

A concentration of a calcium (Ca) component in the solution containing lithium, specifically the concentrated brine, may be 1 g/L to 40 g/L, preferably 2 g/L to 15 g/L, and more preferably 2 g/L to 5 g/L, but is also not limited thereto.

The method for recovering lithium according to the present invention includes a step of adding a calcium remover to the solution containing lithium to precipitate a precipitate containing calcium.

In one embodiment of the present invention, the calcium remover may include one or more selected from the group consisting of sodium hydroxide (NaOH), sodium carbonate (Na₂CO₃), calcium hydroxide (Ca(OH)₂), sodium sulfate (Na₂SO₄), and potassium hydroxide (KOH).

In another embodiment of the present invention, the calcium remover may be sodium carbonate.

When the sodium carbonate is mixed with water and added, the resulting solution is not a saturated solution, and thus calcium removal efficiency is excellent while precipitation of Li₂CO₃ of lithium can be suppressed, which is preferable. In addition, when magnesium is included in the solution containing lithium, calcium and magnesium can be removed at the same time, which is preferable.

The calcium remover may be included in an amount of 0.6 equivalents to 1.5 equivalents (eq/mol), specifically 1.1 equivalents to 1.3 equivalents, based on equivalents of calcium ions, specifically equivalents of calcium ions in the solution containing lithium.

When the calcium remover satisfies the above equivalent range, it is preferable because the calcium/lithium content ratio in Equation 1 can be controlled within an appropriate range, thereby increasing the recovery rate of lithium.

The method for recovering lithium according to the present invention may further include, before the step of precipitating the precipitate containing calcium from the solution containing lithium, a step of pretreating the solution containing lithium.

In other words, the method for recovering lithium according to the present invention may further include, before the step of precipitating the precipitate containing calcium from the solution containing lithium, a step of pretreating the solution containing lithium in order to control Equation 1.

In another embodiment of the present invention, the step of pretreating the solution containing lithium may include a step of further adding an additional additive for precipitating impurities other than calcium.

For example, an additional additive may be further added to remove impurities such as magnesium, boron, sulfur, potassium, sodium, and the like.

The additional additive may be different from the above-described calcium additive.

In another embodiment of the present invention, the additional additive may be calcium hydroxide.

When calcium hydroxide is used as the additional additive, magnesium can be removed in the form of Mg(OH)₂ through introduction of hydroxide ions; pH conditions for removing metal impurities with carbonate can be prepared; even when calcium ions meet sulfate ions and precipitate and are additionally concentrated, generation of lithium sulfate precipitation can be suppressed; and the calcium ions meet borate ions and form a compound, thereby lowering a B concentration.

In another embodiment of the present invention, in the step of further adding the additional additive for precipitating impurities other than calcium, the content of the additional additive may be controlled in order to control Equation 1.

Specifically, by controlling the amount of the calcium-containing additional additive used, the calcium/lithium content ratio multiplied by C in Equation 1 can be reduced, thereby increasing the recovery rate of lithium.

The additional additive may be added in an amount of 0.2 equivalents to 1.10 equivalents (eq/mol), specifically 0.8 equivalents to 1.10 equivalents, and more specifically 0.92 equivalents to 1.02 equivalents, based on equivalents of impurities, specifically sulfate ions and borate ions.

When the additional additive satisfies the above range, it is preferable because impurities, specifically sulfate ions and borate ions, can be excellently removed, while the calcium/lithium content ratio multiplied by C in Equation 1 can be reduced.

In another embodiment of the present invention, the step of pretreating the solution containing lithium may include a step of adjusting the temperature of the solution containing lithium to 50°C or higher, specifically 50°C to 95°C, and more specifically 50°C to 70°C.

When the temperature of the solution containing lithium is within the above range, there is an advantage in that an expected lithium recovery rate can be increased without changing the lithium concentration multiplied by B. In addition, it is preferable because the solubility of a calcium precipitate, for example, a calcium carbonate, is lowered within the solubility of the lithium compound of the solution containing lithium.

In another embodiment of the present invention, the step of pretreating the solution containing lithium may include a step of adding, to the solution containing lithium, a solution having a lower lithium concentration than the solution containing lithium.

When the solution having a lower lithium concentration than the solution containing lithium is added to the solution containing lithium, it is preferable because the lithium recovery rate can be increased by lowering the lithium concentration in the solution containing lithium, which is multiplied by B in Equation 1.

The solution having a lower lithium concentration than the solution containing lithium may be, for example, a subsidiary raw material solution from which calcium has been removed, a liquid solution in a lithium-containing process having a low concentration, fresh water, or the like, but is not limited thereto.

The solution containing lithium to which the calcium remover has been added may be maintained at a pH of 9.3 or higher, specifically 10.0 or higher, and more specifically 10.0 to 11.3.

The pH may be adjusted with one or more alkaline materials selected from the group consisting of NaOH and Ca(OH)₂.

NaOH is preferable because it has a relatively higher degree of dissociation than Ca(OH)₂, and thus can be adjusted to a desired pH with a small input amount.

Ca(OH)₂ is preferable because, compared with NaOH, it can increase a filtration rate during solid-liquid separation in the step of separating the precipitated precipitate to obtain a solution containing lithium from which calcium has been removed, which will be described below.

The content of the alkaline material may be added to satisfy the desired pH.

When the pH range satisfies the above range, calcium removal rate is excellent, and a filtration rate can be improved during solid-liquid separation in the step of separating the precipitated precipitate to obtain a solution containing lithium from which calcium has been removed, which will be described below. In addition, since the generated precipitate has an appropriate particle diameter, filtration is easy, which is preferable.

The step of precipitating the precipitate containing calcium from the solution containing lithium may include a step of adding the calcium remover to the solution containing lithium and then stirring the solution containing lithium.

The step of stirring the solution containing lithium may be performed for 30 minutes to 3 hours, preferably 40 minutes to 3 hours, and more preferably 1 hour to 2 hours.

When the step of stirring the solution containing lithium is performed within the above time range, precipitation of calcium is sufficiently performed while minimizing precipitation time, which is preferable.

The step of stirring the solution containing lithium may be performed at 50 RPM to 400 RPM, preferably 100 RPM to 300 RPM, and more preferably 200 RPM to 300 RPM.

When the solution containing lithium is stirred within the above RPM range, the reaction rate between the calcium remover and calcium becomes faster, thereby improving the precipitation rate and reducing the overall process time, which is preferable.

The method for recovering lithium according to the present invention includes a step of separating the precipitated precipitate to obtain a solution containing lithium from which calcium has been removed.

Separation of the precipitate may be performed using a filtration separation apparatus, but is not limited thereto.

Specifically, in the step of separating the precipitate to obtain the solution containing lithium from which calcium has been removed, the precipitate may be separated using a filter cloth of a filtration separation apparatus, thereby obtaining the solution containing lithium from which calcium has been removed.

As the filtration separation apparatus or the filter cloth, a filtration separation apparatus or filter cloth used in a typical process of recovering lithium from brine or removing impurities may be used, and the present invention does not limit the same.

The solution containing lithium from which calcium has been removed may have a calcium concentration of 0.020 g/L or less, specifically 0.015 g/L or less, and more specifically 0.003 g/L or less.

In another embodiment of the present invention, the method may further include a step of lowering the temperature of the solution containing lithium to which the calcium remover has been added.

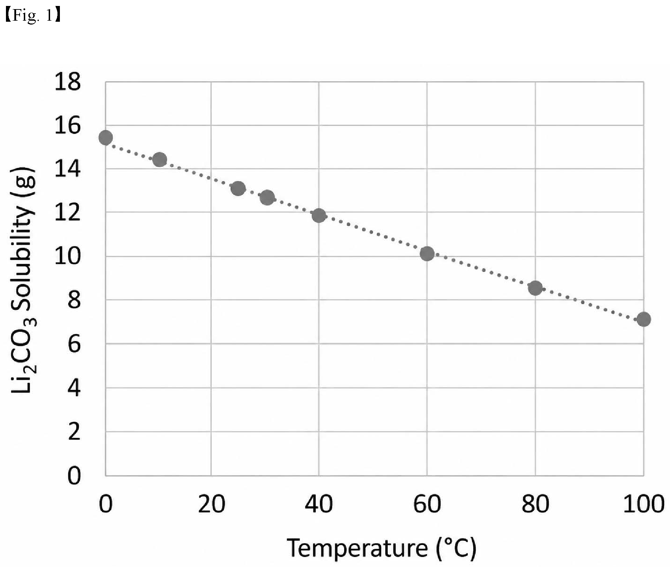

FIG. 1 is a diagram showing solubility of lithium carbonate (Li₂CO₃) according to temperature, and it can be seen that the solubility of lithium carbonate decreases as the temperature increases.

For example, by lowering the temperature of the solution containing lithium to which the calcium remover has been added to 45°C or lower, specifically 35°C or lower, and more specifically 5°C to 15°C, the recovery rate of lithium can be increased. In addition, there is an advantage in that energy required for heating to remove calcium can be saved.

In another embodiment of the present invention, the method may further include a step of adding, to the solution containing lithium from which calcium has been removed, a solution having a lower lithium concentration than the solution containing lithium from which calcium has been removed.

When a solution having a lower lithium concentration is added to the solution, it is preferable because the lithium recovery rate can be increased by lowering the lithium concentration of the solution and lowering the saturation degree during progress of the reaction.

The solution having a lower lithium concentration than the solution containing lithium from which calcium has been removed may be, for example, a subsidiary raw material solution from which calcium has been removed, a liquid solution in a lithium-containing process having a low concentration, fresh water, or the like, but is not limited thereto.

In other words, the solution having a lower lithium concentration than the solution containing lithium from which calcium has been removed may be the same as the above-described solution having a lower lithium concentration than the solution containing lithium, as long as the lithium concentration is lower than that of the solution containing lithium from which calcium has been removed.

In the present invention, the recovery rate of lithium recovered through the solution containing lithium from which calcium has been removed is represented by the following Equation 1. [Equation 1] 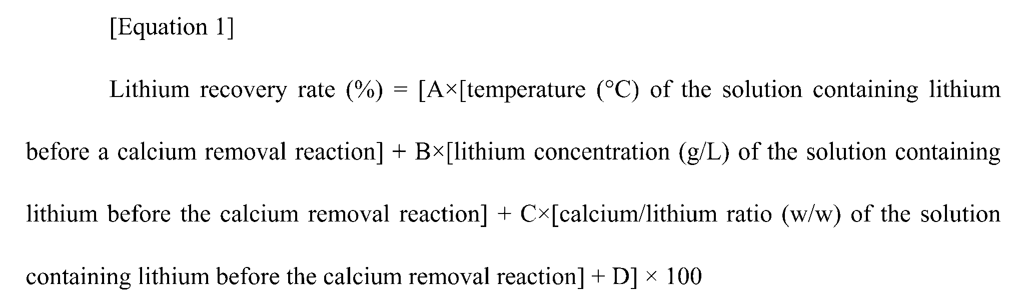 Lithium recovery rate (%) = [A×[temperature (°C) of the solution containing lithium before a calcium removal reaction] + B×[lithium concentration (g/L) of the solution containing lithium before the calcium removal reaction] + C×[calcium/lithium ratio (w/w) of the solution containing lithium before the calcium removal reaction] + D] × 100

In Equation 1,
A is a factor obtained from a graph of lithium recovery rate according to temperature. A may preferably be in a range of -0.0009 to -0.0010.

B is a factor obtained from a graph of lithium recovery rate according to concentration. B may preferably be in a range of -0.009 to -0.010.

C is a factor obtained from a graph of lithium recovery rate according to a Ca ratio relative to Li. C may preferably be in a range of -0.12 to -0.13.

D is a factor that converts the recovery rate in a saturated solution to 100% after the factors A, B, and C are determined. D may preferably be in a range of 1.08 to 1.15, and more preferably 1.09 to 1.11.

In Equation 1, the temperature of the solution containing lithium before the calcium removal reaction may be 45°C or lower, specifically 35°C or lower, and more specifically 5°C to 15°C. The above-described contents may be applied to the temperature of the solution containing lithium before the calcium removal reaction.

In Equation 1, the lithium concentration of the solution containing lithium before the calcium removal reaction may be 0.5 g/L to 20 g/L, preferably 3 g/L to 10 g/L, and more preferably 3 g/L to 5 g/L.

In Equation 1, the calcium content/lithium content of the solution containing lithium before the calcium removal reaction may be 0.9 or less, and preferably 0.88 or less.

In another embodiment of the present invention, after the step of separating the precipitated precipitate to obtain the solution containing lithium from which calcium has been removed, a lithium loss rate may be 5% or less.

Specifically, when compared with the solution containing lithium before adding the calcium remover, the lithium loss rate of the solution containing lithium from which calcium has been removed may be 5% or less, and specifically 3% or less.

Lithium may be recovered by separating, after completion of the reaction in which the precipitate is precipitated, a solid phase and a liquid phase into the solution containing lithium from which calcium has been removed through a reduced-pressure filtration method, and may be recovered from the solution containing lithium from which calcium has been removed.

For example, the solution containing lithium from which calcium has been removed may be carbonated or phosphated to recover lithium in the form of lithium carbonate or lithium phosphate, but is not limited thereto.

The method for recovering lithium according to the present invention has an advantage in that lithium loss is minimized and calcium is easily removed by quantifying process technology for efficiency according to a calcium concentration before calcium removal as Equation 1.

Hereinafter, preferred Examples and Comparative Examples of the present invention will be described. However, the following Examples are merely preferred embodiments of the present invention, and the present invention is not limited to the following Examples.

### Preparation Examples

The compositions of a solution containing lithium before Na₂CO₃ was added as a calcium remover and a solution containing lithium from which calcium had been removed after calcium was precipitated using Na₂CO₃ are shown in Tables 1 to 4. At this time, the solution containing lithium from which calcium had been removed was obtained by the following method.

As the solution containing lithium, Na₂CO₃ powder was added to 200 ml of concentrated brine in an amount of 1.2 equivalents relative to the calcium content. Thereafter, the concentrated brine was adjusted to be maintained at the temperatures according to Tables 1 and 3 below, respectively, and stirred at 200 RPM for 2 hours to precipitate a precipitate.

After the precipitate was precipitated, calcium was removed by separating the solid phase and the liquid phase using a pressure-type solid-liquid separation apparatus, and components of the solution containing lithium from which calcium had been removed were analyzed, and the results are shown in Tables 1 to 4 below. In addition, whether Equation 1 was satisfied is shown in Tables 2 and 4 below.

Component analysis was performed using an ICP analyzer.

**[Table 1]**

| | Temperature (°C) | Composition of Lithium containing solution (g/L) | | | | | | | |
|---|---|---|---|---|---|---|---|---|---|
| | | Li | S | Ca | Mg | B | K | Na | Ca/Li |
| Preparation Example 1 | -5 | 4.286 | 2.276 | 2.612 | 1.245 | 1.221 | 36.034 | 83.898 | 0.609 |
| Preparation Example 2 | -5 | 4.317 | 1.725 | 3.348 | 0.156 | 1.243 | 36.120 | 84.213 | 0.776 |
| Preparation Example 3 | -5 | 4.217 | 1.625 | 3.782 | 0.000 | 1.473 | 35.986 | 83.097 | 0.897 |
| Preparation Example 4 | -5 | 4.175 | 1.591 | 4.044 | 0.000 | 1.441 | 35.886 | 83.456 | 0.969 |
| Preparation Example 5 | -5 | 4.262 | 1.875 | 2.751 | 1.194 | 1.325 | 36.020 | 83.731 | 0.645 |
| Preparation Example 6 | -5 | 4.290 | 1.224 | 4.461 | 0.000 | 1.492 | 36.027 | 83.768 | 1.040 |
| Preparation Example 7 | 5 | 3.948 | 2.434 | 2.401 | 1.491 | 1.062 | 34.840 | 81.810 | 0.608 |
| Preparation Example 8 | 5 | 3.964 | 1.750 | 3.122 | 0.379 | 1.015 | 35.120 | 82.420 | 0.788 |
| Preparation Example 9 | 5 | 3.962 | 1.465 | 3.894 | 0.000 | 1.372 | 35.360 | 82.820 | 0.983 |
| Preparation Example 10 | 5 | 3.874 | 1.371 | 3.951 | 0.000 | 1.388 | 35.130 | 82.210 | 1.020 |
| Preparation Example 11 | 5 | 3.980 | 1.815 | 2.875 | 0.340 | 1.280 | 35.657 | 85.073 | 0.722 |
| Preparation Example 12 | 5 | 3.911 | 1.215 | 4.253 | 0.000 | 1.286 | 35.623 | 85.205 | 1.088 |
| Preparation Example 13 | 15 | 4.205 | 1.831 | 2.168 | 0.876 | 0.864 | 36.066 | 83.443 | 0.516 |
| Preparation Example 14 | 15 | 4.193 | 1.300 | 3.043 | 0.033 | 1.038 | 35.816 | 82.926 | 0.726 |
| Preparation Example 15 | 15 | 4.153 | 1.204 | 3.630 | 0.000 | 1.445 | 35.950 | 83.411 | 0.874 |
| Preparation Example 16 | 15 | 4.129 | 1.266 | 3.562 | 0.000 | 1.338 | 36.054 | 83.626 | 0.863 |
| Preparation Example 17 | 15 | 4.177 | 1.638 | 2.485 | 0.147 | 1.105 | 35.580 | 83.596 | 0.595 |
| Preparation Example 18 | 15 | 4.180 | 1.170 | 4.350 | 0.000 | 1.338 | 35.636 | 83.003 | 1.041 |

**[Table 2]**

| | | | | | | | Composition of lithium containing solution, removed calcium (g/L) | Recovery Rate | Equation 1 |
|---|---|---|---|---|---|---|---|---|---|
| | Li | S | Ca | Mg | B | K | Na | | Calculation Result |
| Preparation Example 1 | 4.075 | 1.526 | 0.483 | 0.000 | 0.859 | 35.969 | 87.922 | 95.08% | 98.58% |
| Preparation Example 2 | 4.180 | 2.304 | 0.098 | 0.691 | 0.734 | 35.662 | 88.362 | 96.83% | 96.48% |
| Preparation Example 3 | 4.104 | 1.808 | 0.009 | 0.059 | 0.775 | 35.361 | 88.643 | 97.32% | 95.06% |
| Preparation Example 4 | 4.007 | 1.465 | 0.073 | 0.000 | 1.093 | 35.593 | 88.709 | 95.98% | 94.21% |
| Preparation Example 5 | 4.157 | 2.060 | 0.329 | 0.926 | 1.288 | 36.014 | 87.722 | 97.54% | 98.15% |
| Preparation Example 6 | 3.884 | 1.577 | 0.313 | 0.000 | 1.491 | 36.012 | 90.481 | 90.54% | 93.21% |
| Preparation Example 7 | 3.945 | 2.357 | 0.374 | 1.027 | 0.880 | 34.463 | 86.624 | 99.92% | 97.99% |
| Preparation Example 8 | 3.917 | 1.795 | 0.099 | 0.209 | 0.863 | 34.359 | 87.067 | 98.80% | 95.74% |
| Preparation Example 9 | 3.650 | 1.410 | 0.007 | 0.000 | 1.343 | 33.067 | 84.372 | 92.14% | 93.31% |
| Preparation Example 10 | 3.586 | 1.329 | 0.005 | 0.000 | 1.342 | 32.928 | 85.104 | 92.58% | 92.93% |
| Preparation Example 11 | 3.827 | 1.815 | 0.283 | 0.262 | 1.145 | 35.664 | 88.602 | 96.14% | 96.54% |
| Preparation Example 12 | 3.502 | 1.215 | 0.249 | 0.000 | 1.286 | 35.623 | 91.308 | 89.55% | 92.05% |
| Preparation Example 13 | 4.148 | 1.928 | 0.417 | 0.674 | 0.743 | 35.980 | 86.810 | 98.64% | 97.99% |
| Preparation Example 14 | 4.071 | 1.298 | 0.014 | 0.000 | 1.019 | 35.980 | 87.600 | 97.09% | 95.38% |
| Preparation Example 15 | 3.903 | 1.173 | 0.008 | 0.000 | 1.375 | 35.420 | 87.420 | 93.98% | 93.57% |
| Preparation Example 16 | 3.811 | 1.219 | 0.013 | 0.000 | 1.256 | 34.780 | 85.740 | 92.30% | 93.74% |
| Preparation Example 17 | 4.042 | 1.638 | 0.322 | 0.105 | 1.029 | 35.584 | 86.578 | 96.77% | 97.03% |
| Preparation Example 18 | 3.819 | 1.170 | 0.315 | 0.000 | 1.338 | 35.636 | 88.942 | 91.36% | 91.47% |

Referring to Tables 1 and 2, it can be seen that, when the calcium content/lithium content was less than 0.9 and the temperature of the solution containing lithium to which Na₂CO₃ was added was maintained at -5°C or 5°C, the recovery rate of lithium was 95% or more, and it was confirmed that this could be predicted using Equation 1.

In addition, it can be seen that, when the calcium content/lithium content was 0.9 or more, the recovery rate of lithium somewhat decreased.

When the temperature of the solution containing lithium to which Na₂CO₃ was added was maintained at 15°C, it can be seen that the recovery rate of lithium somewhat decreased even when the calcium content/lithium content was less than 0.9.

**[Table 3]**

| | Temp. (°C) | Composition of lithium containing solution (g/L) | | | | | | | |
|---|---|---|---|---|---|---|---|---|---|
| | | Li | S | Ca | Mg | B | K | Na | Ca/Li |
| Preparation Example 19 | 40 | 4.134 | 1.182 | 3.540 | 0.000 | 1.366 | 35.778 | 83.872 | 0.856 |
| Preparation Example 20 | 40 | 4.092 | 1.118 | 3.983 | 0.000 | 1.332 | 35.791 | 83.179 | 0.973 |
| Preparation Example 21 | 70 | 3.938 | 1.604 | 1.660 | 0.000 | 1.413 | 35.731 | 83.223 | 0.421 |
| Preparation Example 22 | 70 | 3.912 | 0.867 | 3.601 | 0.000 | 1.346 | 35.765 | 83.205 | 0.921 |
| Preparation Example 23 | 70 | 5.935 | 0.572 | 5.279 | 0.000 | 1.346 | 35.765 | 83.070 | 0.889 |
| Preparation Example 24 | 70 | 9.005 | 0.430 | 8.206 | 0.000 | 1.346 | 35.765 | 82.953 | 0.911 |
| Preparation Example 25 | 70 | 13.663 | 0.298 | 12.754 | 0.000 | 1.346 | 35.765 | 82.834 | 0.933 |

**[Table 4]**

| | Composition of lithium containing solution, removed calcium (g/L) | | | | | | | Recovery Rate | Equation 1 Calculation Result |
|---|---|---|---|---|---|---|---|---|---|
| | Li | s | Ca | Mg | B | K | Na | | |
| Preparation Example 19 | 3.864 | 1.182 | 0.379 | 0.000 | 1.366 | 35.778 | 88.464 | 93.47% | 91.52% |
| Preparation Example 20 | 3.730 | 1.118 | 0.355 | 0.000 | 1.332 | 35.792 | 88.617 | 91.14% | 90.10% |
| Preparation Example 21 | 3.628 | 1.604 | 0.422 | 0.000 | 1.413 | 35.731 | 85.720 | 92.14% | 94.37% |
| Preparation Example 22 | 3.409 | 0.867 | 0.393 | 0.000 | 1.346 | 35.765 | 88.607 | 87.14% | 88.17% |
| Preparation Example 23 | 5.204 | 0.572 | 0.981 | 0.000 | 1.346 | 35.765 | 90.444 | 87.68% | 86.71% |
| Preparation Example 24 | 7.597 | 0.430 | 2.528 | 0.000 | 1.346 | 35.765 | 94.144 | 84.36% | 83.64% |
| Preparation Example 25 | 10.732 | 0.298 | 6.297 | 0.000 | 1.346 | 35.765 | 99.955 | 78.55% | 79.11% |

Referring to Tables 3 and 4, it can be seen that, even when the temperature of the solution containing lithium to which Na₂CO₃ was added was maintained the same, when the concentration of Li increased, the recovery rate of lithium somewhat decreased.

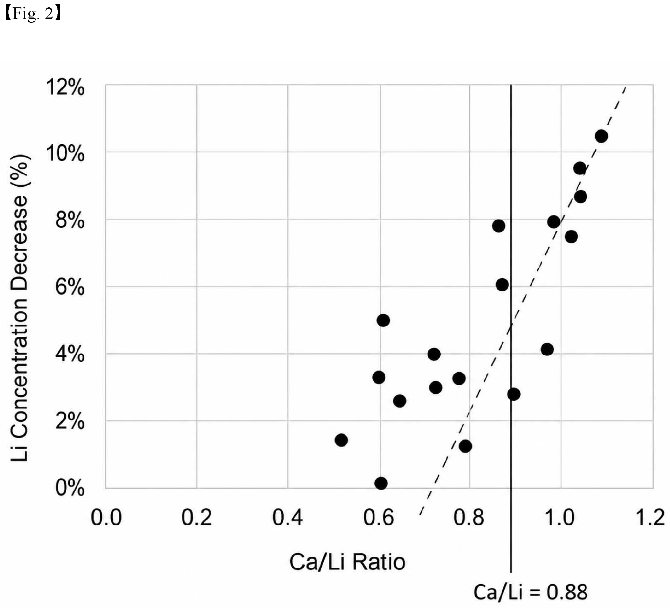

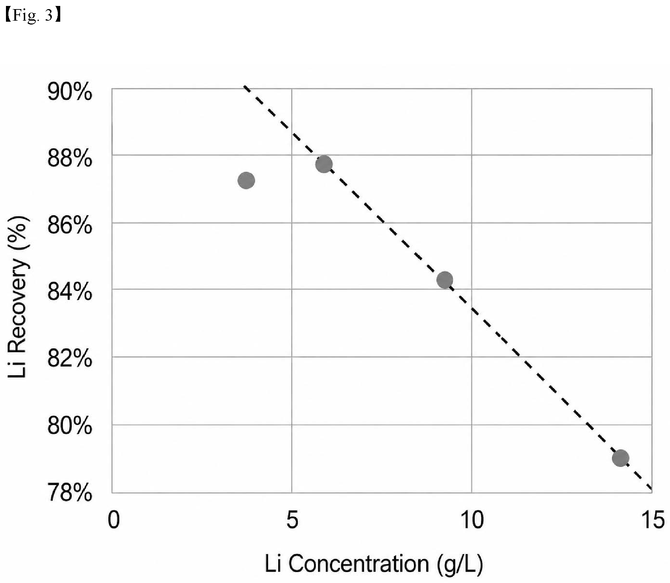

FIG. 2 is a graph showing a decrease amount of lithium concentration (100% - recovery rate) according to the calcium content/lithium content of Preparation Examples 1 to 18. In addition, FIG. 3 is a graph showing the lithium recovery rate according to the lithium concentration of the lithium-containing solution of Preparation Examples 22 to 25.

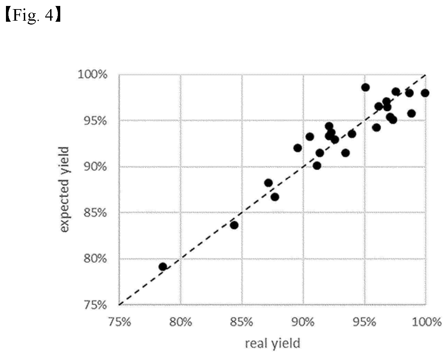

Referring to FIGS. 2 and 3, it can be seen that, as the calcium/lithium content ratio increases, the decrease amount of lithium concentration decreases, and as the lithium concentration of the lithium-containing solution increases, the recovery rate of lithium decreases. In addition, through FIG. 4, it can be confirmed that the predicted results of Equation 1 and the actual results show similar tendencies.

In other words, it can be seen that the recovery rate of lithium can be controlled by controlling the temperature of the solution containing lithium before the calcium removal reaction according to the present invention, the lithium concentration of the solution containing lithium before the calcium removal reaction, and the calcium/lithium ratio of the solution containing lithium before the calcium removal reaction.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A method for recovering lithium, comprising:
preparing a solution containing lithium;
adding a calcium remover to the solution containing lithium to precipitate a precipitate containing calcium; and
separating the precipitated precipitate to obtain a solution containing lithium from which calcium has been removed,
wherein a recovery rate of lithium satisfies the following Equation 1: [Equation 1] 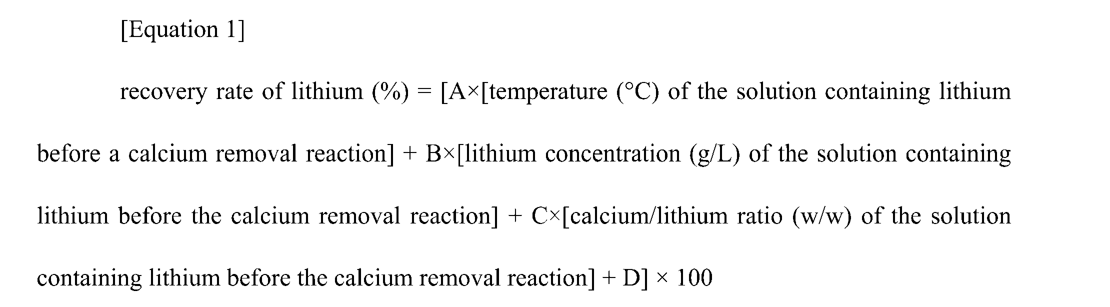 recovery rate of lithium (%) = [A×[temperature (°C) of the solution containing lithium before a calcium removal reaction] + B×[lithium concentration (g/L) of the solution containing lithium before the calcium removal reaction] + C×[calcium/lithium ratio (w/w) of the solution containing lithium before the calcium removal reaction] + D] × 100
wherein, in Equation 1,
A is a rational number from -0.0008 to -0.0012,
B is a rational number from -0.008 to -0.012,
C is a rational number from -0.1 to -0.15, and
D is a rational number from 1.05 to 1.20.

2. The method for recovering lithium of claim 1,
further comprising, before precipitating the precipitate containing calcium from the solution containing lithium, pretreating the solution containing lithium.

3. The method for recovering lithium of claim 2,
wherein pretreating the solution containing lithium comprises further adding an additional additive for precipitating impurities other than calcium.

4. The method for recovering lithium of claim 2,
wherein pretreating the solution containing lithium comprises adjusting a temperature of the solution containing lithium to 50°C or higher.

5. The method for recovering lithium of claim 3,
wherein, in further adding the additional additive for precipitating impurities other than calcium, a content of the additional additive is controlled to control Equation 1.

6. The method for recovering lithium of claim 2,
wherein pretreating the solution containing lithium comprises adding, to the solution containing lithium, a solution having a lower lithium concentration than the solution containing lithium.

7. The method for recovering lithium of claim 1,
wherein the calcium remover comprises one or more selected from the group consisting of sodium hydroxide (NaOH), sodium carbonate (Na₂CO₃), calcium hydroxide (Ca(OH)₂), sodium sulfate (Na₂SO₄), and potassium hydroxide (KOH).

8. The method for recovering lithium of claim 7,
wherein the calcium remover is sodium carbonate (Na₂CO₃).

9. The method for recovering lithium of claim 1,
wherein the calcium remover is added in an amount of 0.2 equivalents to 1.0 equivalent (eq/mol) based on equivalents of calcium ions.

10. The method for recovering lithium of claim 3,
wherein the additional additive is calcium hydroxide (Ca(OH)₂).

11. The method for recovering lithium of claim 1,
further comprising lowering a temperature of the solution containing lithium to which the calcium remover has been added.

12. The method for recovering lithium of claim 1,
further comprising adding, to the solution containing lithium from which calcium has been removed, a solution having a lower lithium concentration than the solution containing lithium from which calcium has been removed.

13. The method for recovering lithium of claim 1,
wherein a lithium loss rate is 5% or less after separating the precipitated precipitate to obtain the solution containing lithium from which calcium has been removed.
